# EUROPEAN PATENT APPLICATION

(11) **EP 4 451 426 A1**
(43) Date of publication of application: **23.10.2024**
(21) Application number: 24165945.7
(22) Date of filing: 25.03.2024
(51) Int. Cl.: H01M 10/613, H01M 50/503, H01M 50/545, H01M 50/548, H01M 50/509, H01M 50/526, H01M 50/547, H01M 50/593

(54) **ASSEMBLED BATTERY**

(30) Priority: 13.04.2023 JP 2023065874
(71) Applicant: TOYOTA JIDOSHA KABUSHIKI KAISHA, Toyota-shi, Aichi-ken, 471-8571 (JP)
(72) Inventor: FUJISAKI, Sadao, Toyota-shi, 471-8571 (JP)
(74) Representative: D Young & Co LLP

(57) **Abstract**

An assembled battery comprising battery cells (11), a first and a second inter-cell connecting films having a first and a second conductive patterns, respectively, each of battery cells including a conductive exterior body housing an electrode body in the interior, the exterior body having a positive (111a) and a negative (111b )electrode terminal portions electrically connected to the positive and the negative electrodes of the electrode body, respectively, wherein one of the positive and negative electrode terminal portions of the exterior body of each of battery cells is in contact with the first conductive pattern, so that the other is in contact with the second conductive pattern, each of battery cells is sandwiched by the first and the second inter-cell connecting films, whereby via the first and the second conductive patterns, each of battery cells are electrically connected in parallel and/or in series with each other.

## Description

### [Technical Field]

The present disclosure relates to an assembled battery.

### [Background of the Invention]

A conventional assembled battery includes a plurality of battery cells which are electrically connected.

Patent Literature 1 discloses a battery system assembled to a battery block such that a battery block formed by stacking a plurality of battery cells and electrodes of the battery cells are electrically connected to a bus bar provided on a flexible printed circuit board.

### [Citations List]

### [Patent Literature]

[Patent Literature 1] JP 2014-086246 A

### [Summary of the invention]

### [Technical Problem of Invention]

A conventional method of electrically connecting a plurality of battery cells includes fastening structure using bolts. However, the authors of the present disclosure have found that it is preferable to connect the battery cells with a film.

### [Solution to Problem]

### <Embodiment 1>

An assembled battery, wherein
the assembled battery comprises a plurality of battery cells, a first inter-cell connecting film, and a second inter-cell connecting film;
each of the plurality of battery cells includes a conductive exterior body and an electrode body housed in the interior of the exterior body;
the exterior body has a positive electrode terminal portion electrically connected to the positive electrode of the electrode body, and a negative electrode terminal portion electrically connected to the negative electrode of the electrode body;
the first inter-cell connecting film has a first conductive pattern;
the second inter-cell connecting film has a second conductive pattern; and
one of the positive electrode terminal portion and the negative electrode terminal portion of the exterior body of each of the plurality of battery cells is in contact with the first conductive pattern, so that the other is in contact with the second conductive pattern, each of the plurality of battery cells is sandwiched by the first inter-cell connecting film and the second inter-cell connecting film, whereby via the first conductive pattern and the second conductive pattern, each of the plurality of battery cells is electrically connected in parallel and/or in series with one another.

### <Embodiment 2>

The assembled battery according to embodiment 1, wherein
the positive electrode terminal portion of the exterior body of the plurality of battery cells contacts the first conductive pattern, and
the negative electrode terminal portion of the exterior body of the plurality of battery cells is in contact with the second conductive pattern,
whereby each of the plurality of battery cells is electrically connected in parallel to one another.

### <Embodiment 3>

The assembled battery according to embodiment 1, wherein
in the first conductive pattern, the positive electrode terminal portion of the exterior body of the battery cell of the first group of the plurality of battery cells and the negative electrode terminal portion of the exterior body of the battery cell of the second group of the plurality of battery cells are in contact with each other,
the positive electrode terminal portion of the exterior body of the battery cell of the second group of the plurality of battery cells and the negative electrode terminal portion of the exterior body of the battery cell of the first group of the plurality of battery cells in contact with the second conductive pattern,
whereby, at least a portion of the plurality of battery cells is electrically connected in series with one another.

### <Embodiment 4>

The assembled battery according to embodiment 1, wherein a cross-sectional shape of the exterior body on the positive electrode side and/or the exterior body on the negative electrode side of the battery cell is U-shaped.

### <Embodiment 5>

The assembled battery according to any one of embodiments 1 to 4, wherein the first inter-cell connecting film has a first conductive pattern, and a first insulating substrate supporting the first conductive pattern; and the second inter-cell connecting film has a second conductive pattern, and a second insulating substrate supporting the second conductive pattern.

### <Embodiment 6>

The assembled battery according to embodiment 5, wherein the first conductive pattern and the second conductive pattern are metal, and the first insulating substrate and the second insulating substrate are resin.

### <Embodiment 7>

The assembled battery according to any one of embodiments 1 to 6, wherein a cooling layer is laminated on one or both of a surface opposite to a surface in contact with the positive electrode terminal portion or the negative electrode terminal portion of the first inter-cell connecting film and a surface opposite to a surface in contact with the positive electrode terminal portion or the negative electrode terminal portion of the second inter-cell connecting film.

### <Embodiment 8>

The assembled battery according to any one of embodiments 1 to 7, wherein one or both of the first inter-cell connecting film and the second inter-cell connecting film has a positioning portion, and each of the plurality of battery cells is positioned by the positioning portion.

### [Advantageous Effects of Invention]

According to the present disclosure, it is possible to provide an assembled battery in which battery cells are connected by a film.

### [Brief Description of Drawings]

FIG. 1 is a schematic view of a battery cell included in the assembled battery of the present disclosure.
FIGs. 2A to 2D are diagrams showing an example of the degree of freedom of the shape of the assembled battery as a whole of the present disclosure.
FIGs. 3A to 3D are schematic diagrams of a conductive pattern in the assembled battery of the present disclosure.
FIGs. 4A and 4B are schematic views of a positioning portion in the assembled battery of the present disclosure.
FIGs. 5A and 5B are schematic diagrams of a first connection embodiment of the assembled battery of the present disclosure.
FIG. 6 is a schematic diagram of a second connection embodiment of the assembled battery of the present disclosure.
FIG. 7 is a schematic diagram of a third connection embodiment of the assembled battery of the present disclosure.
FIG. 8 is a schematic diagram of a fourth connection embodiment of the assembled battery of the present disclosure.
FIGs. 9A and 9B are diagram showings an example of an arrangement of battery cells in a plane direction in the assembled battery of the present disclosure.
FIGs. 10A to 10D are diagrams showing another example of an arrangement of battery cells in a plane direction in the assembled battery of the present disclosure.

### [Description of Embodiments]

Hereinafter, the present disclosure will be described in detail with reference to the drawings. However, the present disclosure is not limited to this embodiment.

The assembled battery of the present disclosure comprises a plurality of battery cells, a first inter-cell connecting film, and a second inter-cell connecting film.

In the assembled battery of the present disclosure, a plurality of exterior bodies have a positive electrode terminal portion electrically connected to the positive electrode of the electrode body, and a negative electrode terminal portion electrically connected to the negative electrode of the electrode body, the first inter-cell connecting film has a first conductive pattern, and the second inter-cell connecting film has a second conductive pattern.

Further, in the assembled battery of the present disclosure, one of the positive electrode terminal portion and the negative electrode terminal portion of the exterior body of each of the plurality of battery cells is in contact with the first conductive pattern and the other is in contact with the second conductive pattern, and each of the plurality of battery cells is sandwiched between the first inter-cell connecting film and the second inter-cell connecting film, whereby each of the plurality of battery cells is electrically connected in parallel and/or in series with one another via the first conductive pattern and the second conductive pattern.

According to the assembled battery of the present disclosure, by connecting a plurality of battery cells in contact with a film having a directly conductive pattern, it is possible to electrically connect a plurality of battery cells even when fastening by bolts, nuts, or the like is not used. As a result, the space occupied by the assembled battery can be reduced, and the structural efficiency of the assembled battery can be improved. Further, since bolts, nuts, and the like are not required, the weight of the assembled battery can be reduced. However, if necessary, the assembled battery of the present disclosure may have a bolt, a nut, or the like.

Further, in the assembled battery of the present disclosure, the plurality of battery cells can be connected to each other by freely selecting, for example, a series connection, a parallel connection, or a connection in which a series connection and a parallel connection are mixed.

The configuration of the assembled battery of the present disclosure, the connection type of the battery cells, and the arrangement of the battery cells in the plane direction will be described below.

### <<Configurations>>

### (Battery cell)

The assembled battery of the present disclosure comprises a plurality of battery cells, and each of the plurality of battery cells includes a conductive exterior body and an electrode body accommodated in the interior of the exterior body. The exterior body has a positive electrode terminal portion electrically connected to the positive electrode of the electrode body and a negative electrode terminal portion electrically connected to the negative electrode of the electrode body.

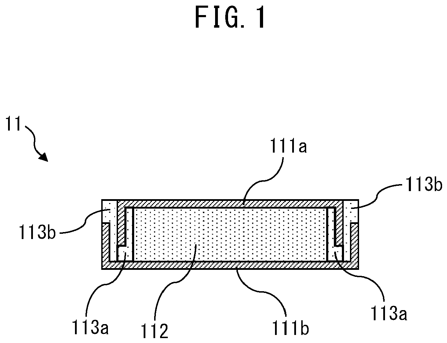

Specifically, for example, as shown in FIG. 1, the battery cell 11 includes an exterior body and an electrode body 112 accommodated in the interior of the exterior body. The exterior body 111a on the positive electrode side of the electrode body has a conductive positive-electrode terminal portion electrically connected to the positive electrode of the electrode body, and the exterior body 111b on the negative-electrode-side of the electrode body has a conductive negative-electrode terminal portion electrically connected to the negative electrode of the electrode body.

The plurality of battery cells may be, for example, lithium-ion battery cells or nickel-metal hydride battery cells. The exterior bodies 111a, 111b may be metallic, such as gold, silver, copper, aluminum, nickel, iron, zinc, alloys comprising one or more of these, such as stainless steel, brass, and the like.

Insulating portions 113a, 113b may be provided between the exterior body 111a on the positive electrode side of the electrode body and the exterior body 111b on the negative electrode side of the electrode body, and on the side surface of the electrode body 112, in order to insulate the exterior body 111a on the positive electrode side of the electrode body, the exterior body 111b on the negative electrode side of the electrode body, and the side surface of the electrode body 112, and in order to seal the electrode body 112. The insulating portions 113a, 113b may be, for example, resin.

In the embodiment shown in FIG. 1, both the exterior body 111a on the positive electrode side of the electrode body and the exterior body 11 1b on the negative electrode side of the electrode body have a U-shaped or concave cross-sectional shape. It is possible that only one of the exterior bodies 111a and 111b has a U-shaped or concave cross-sectional shape, and the other has a straight line cross-sectional shape. By forming the cross-sectional shape into a U-shape or a concave shape, it is possible to prevent intrusion of moisture. In particular, in the sulfide all-solid-state battery, since there is a possibility that hydrogen sulfide is generated by reacting with moisture, it is preferable that moisture is not transmitted through the resin portion between the overlapped metal plates.

Hereinafter, the prevention of intrusion of moisture will be described in more detail. The metallic material used for the exterior bodies 111a, 111b does not allow moisture to pass therethrough, but when the insulating part 113a, 113b is made of a resin, the resin allows a small amount moisture to pass therethrough. The permeation amount of moisture is proportional to the cross-sectional area and is inversely proportional to the passing length. Therefore, it is advantageous for preventing the intrusion of moisture that the gap between the exterior bodies in which the resin is disposed is made narrow and long by making the cross-sectional shape of the exterior body U-shaped or concave.

Therefore, as shown in FIG. 1, for both the exterior body 111a on the positive electrode side of the electrode body and the exterior body 111b on the negative electrode side of the electrode body, when the cross-sectional shape is U-shaped and there is a portion where the exterior bodies 111a, 111b overlap with each other on the side surface of the battery cell, the gap between the exterior bodies in which the resin is disposed can be made narrow and long, whereby the intrusion of moisture can be prevented effectively.

The size of the battery cell is not particularly limited. For example, it may be 20mm×20mm or more, 30mm×30mm or more, 40mm×40mm or more, or 50mm×50mm or more. The shape of the battery cell is not limited to a square. The size of the battery cell may be, for example, 200mm×500mm or less, 200mm×300mm or less, 200mm×200mm or less, 150mm×150mm or less, or 100mm×100mm or less. The thickness of the battery cell can be, for example, 2.0mm or more, 2.5mm or more, or 3.0mm or more. The thickness of the battery cell may be, for example, 30.0mm or less, 20mm or less, 10mm or less, or 5.0mm or less. The distance between the battery cell and the battery cell may be, for example, 0.1mm or more, 0.3mm or more, or 0.5mm or more. The distance between the battery cell and the battery cell may be, for example, 5.0mm or less, 4.0mm or less, or 3.0mm or less.

### (First inter-cell connecting film and second inter-cell connecting film)

The assembled battery of the present disclosure includes a first inter-cell connecting film and a second inter-cell connecting film. The first inter-cell connecting film has a first conductive pattern, and the second inter-cell connecting film has a second conductive pattern. In the following description, the first inter-cell connecting film and the second inter-cell connecting film are collectively referred to simply as "inter-cell connecting film". The first conductive pattern and the second conductive pattern are also collectively referred to simply as a "conductive pattern".

The inter-cell connecting film may be composed of only a conductive pattern. Alternatively, the first inter-cell connecting film may have a first conductive pattern and a first insulating substrate supporting the first conductive pattern, and the second inter-cell connecting film may have a second conductive pattern and a second insulating substrate supporting the second conductive pattern. In the following description, the first insulating substrate and the second insulating substrate are collectively simply referred to as "insulating substrate". The conductive pattern may be formed only on a part of the surface of the insulating substrate or may be formed on the entire surface of the insulating substrate. When the insulating substrate is provided, the assembled battery can be electrically insulated from the outside of the assembled battery, so that the possibility of electric leakage or the like is reduced, and the electrical performance can be improved.

The first conductive pattern and the second conductive pattern may be metal, for example, gold, silver, copper, aluminum, an alloy containing one or more of the foregoing, or the like. The first insulating substrate and the second insulating substrate may be resins, such as polyethylene terephthalate, nylon, polymethyl methacrylate, polypropylene, polycarbonate, polyalkylene terephthalate, polyimide, epoxy resin, and the like.

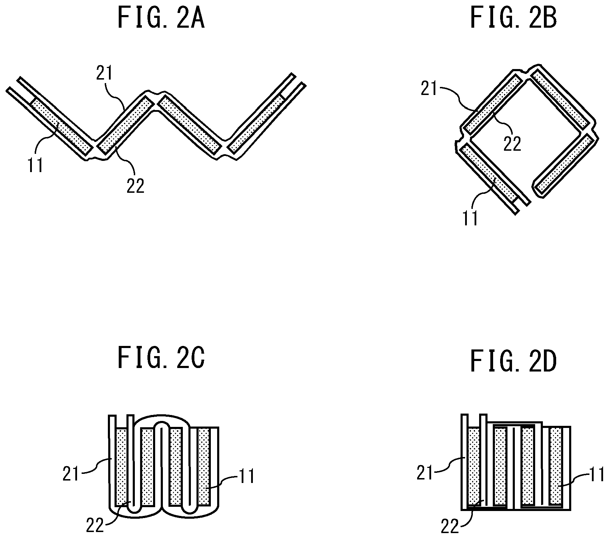

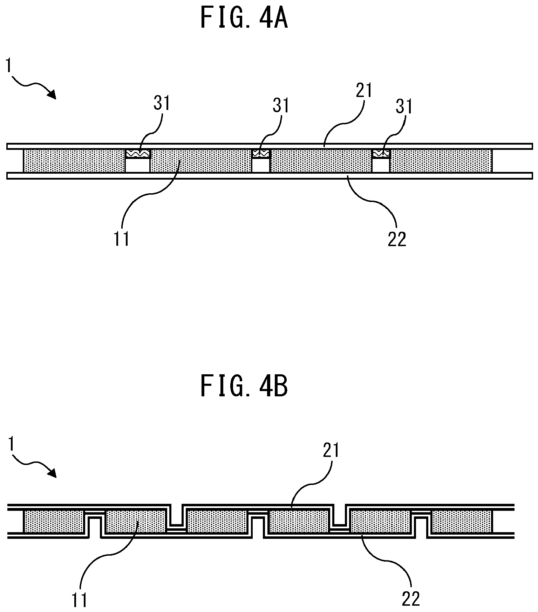

Further, by making the inter-cell connecting film flexible, the shape of the assembled battery as a whole can be freely changed. As a result, the restriction on the place where the assembled battery is arranged is reduced. FIGs. 2A to 2D show an example in which the shape of the assembled battery of the present disclosure is changed. The assembled battery of the present disclosure can be bent as shown in FIG. 2A and FIG. 2B by making the inter-cell connecting film flexible. Further, as shown in FIG. 2C and FIG. 2D, it is possible to make the meandering fold. When making the meandering fold, as shown in FIG. 2C, the outer film needs to be stretched. As shown in FIG. 4B, by providing unevennesses in the inter-cell connecting film, the outer film can be shaped so as not to stretch, as shown in FIG. 2D, when making the meandering fold.

The size of the inter-cell connecting film is not limited as long as it allows the battery cells to be sandwiched therebetween. Since it is not necessary to be extremely large as compared with the battery cell, for example, the size may be the position of 0.1 mm to 5.0 mm from the end of the battery cell. When the battery exterior body can be insulated by other than the inter-cell connecting film, the size of the inter-cell connecting film may be smaller than that of the battery cell. When a terminal is provided at an end of the inter-cell connecting film, the inter-cell connecting film may be lengthened as necessary.

The thickness of the inter-cell connecting film may be appropriately set in consideration of the balance of the required flexibility and strength. The thickness of the conductive surface side may be, for example, 0.005mm or more, 0.01mm or more, or 0.02mm or more. The thickness of the conductive surface side may be, for example, 0.10mm or less, 0.09mm or less, or 0.08mm or less. The thickness of the insulating surface side may be, for example, 0.005mm or more, 0.01mm or more, or 0.02 or more. The thickness of the insulating surface side may be, for example, 0.10mm or less, 0.09mm or less, or 0.08mm or less.

As a method of contacting the battery cell with the inter-cell connecting film, a shrink film, a constraining band, an adhesive, ultrasonic welding, laser welding, electric welding, or the like may be used. Alternatively, as a method of contacting the battery cells with the inter-cell connecting film, the inter-cell connecting film may be sandwiched and fixed by a plate or the like from the outside of the inter-cell connecting film. Alternatively, the battery cells may be contacted with the inter-cell connecting film using a spring or the like.

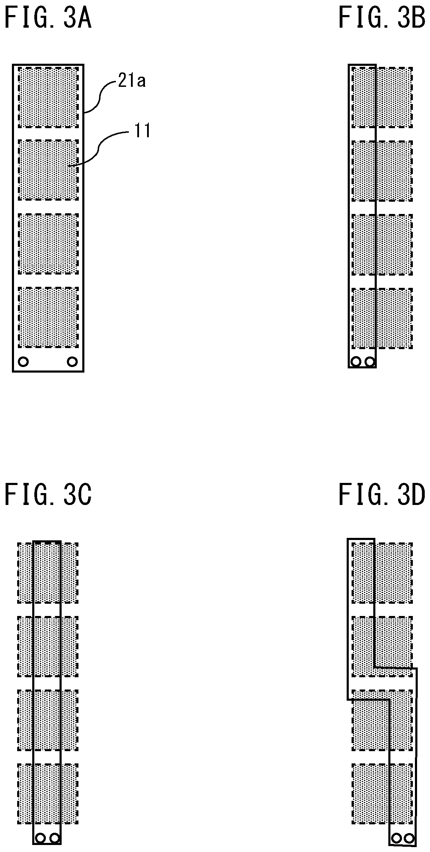

FIGs. 3A to 3D show an example in which a conductive pattern is formed on one side of an inter-cell connecting film. FIG. 3A is an example formed on the entire surface of the insulating substrate, and FIGs. 3B to 3D are examples in which a conductive pattern is formed on a part of the surface of the insulating substrate. Note that in FIGs. 3A to 3D, the insulating substrate is not shown.

One or both of the first inter-cell connecting film and the second inter-cell connecting film optionally have a positioning portion, and each of the plurality of battery cells may be positioned by the positioning portion. FIGs. 4A and 4B are a diagram schematically showing the assembled battery 1 in which the positioning portion 31 is provided in the first inter-cell connecting film 21. By providing the positioning portion, it is possible to obtain an assembled battery in which the battery cells are accurately positioned and excellent in performance such as durability. The positioning portion may be, for example, a resin as shown in FIG. 4A. The inter-cell connecting film may be notched without using a resin or the like, or the inter-cell connecting film may be bent into an uneven shape as shown in FIG. 4B to form a positioning portion. When the inter-cell connecting film is bent into an uneven shape to form a positioning portion, it can be adjusted so that the outer film does not need to be stretched, as shown in FIG. 2D, when the assembled battery is meandering folded. The thickness of the positioning portion is thinner than that of the battery cell. The thickness of the positioning portion may be, for example, 0.02mm or more, 0.03mm or more, or 0.05mm or more. The thickness of the positioning portion may be, for example, 0.50mm or less, 0.40mm or less, or 0.30mm or less.

### (Cooling layer)

In the assembled battery of the present disclosure, a cooling layer may be optionally laminated on one or both surfaces of a surface opposite to a surface in contact with the positive electrode terminal portion or the negative electrode terminal portion of the first inter-cell connecting film and a surface opposite to a surface in contact with the positive electrode terminal portion or the negative electrode terminal portion of the second inter-cell connecting film. As the cooling layer, for example, an aluminum plate may be integrally provided on the outside of the inter-cell connecting film. Thereby, it is possible to obtain an assembled battery having excellent cooling performance.

### <<Connection type>>

In the assembled battery of the present disclosure, each of the plurality of battery cells is sandwiched between the first inter-cell connecting film and the second inter-cell connecting film such that one of the positive electrode terminal portion and the negative electrode terminal portion of the exterior body of each of the plurality of battery cells contacts the first conductive pattern and the other contacts the second conductive pattern. Each of the plurality of battery cells is electrically connected in parallel and/or in series with one another via the first conductive pattern and the second conductive pattern. The end portion of the inter-cell connecting film may be provided with a hole and serve as a terminal.

Hereinafter, the electrical connection of the battery cells in the assembled battery of the present disclosure will be described with reference to the drawings showing the schematic of specific embodiments. The electrical connection of the present disclosure is not limited to the following embodiments.

### <Parallel connection>

First, an example in which each of the plurality of battery cells is electrically connected in parallel to one another will be described.

In the assembled battery of the present disclosure, the positive electrode terminal portion of the exterior body of the plurality of battery cells may be in contact with the first conductive pattern, and the negative electrode terminal portion of the exterior body of the plurality of battery cells may be in contact with the second conductive pattern, whereby each of the plurality of battery cells may be electrically connected in parallel to one another.

### (First connection embodiment (parallel connection))

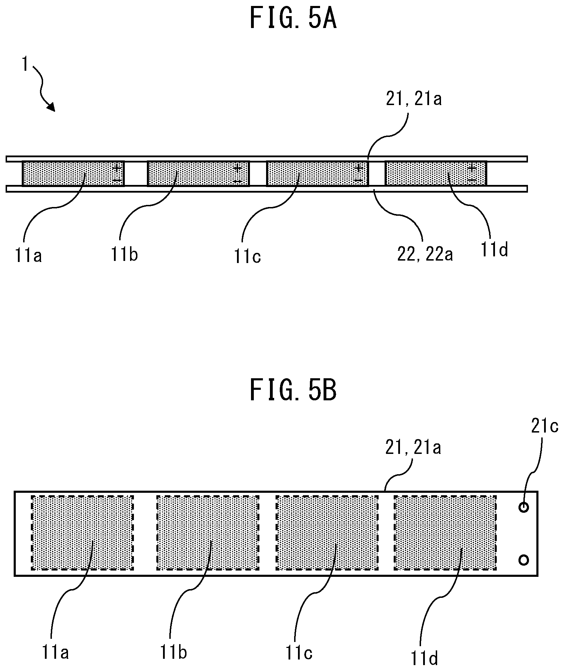

FIGs. 5A and 5B schematically illustrate a first connection embodiment of the present disclosure in which each of a plurality of battery cells are electrically connected in parallel to one another.

FIG. 5A is a schematic view of the assembled battery 1 of the present disclosure viewed from the side, and FIG. 5B is a schematic view of the assembled battery 1 of the present disclosure viewed from the upper surface.

In the assembled battery 1 shown in FIGs. 5A and 5B, the first inter-cell connecting film 21 and the second inter-cell connecting film 22 are respectively composed of only the first conductive pattern 21a and the second conductive pattern 22a, and the four battery cells 11a, 11b, 11c, 11d are electrically connected to the first conductive pattern 21a and the second conductive pattern 22a. At the end portions of the first conductive pattern 21a and the second conductive pattern 22a, a hole 21c is provided (only the hole of the first conductive pattern 21a is illustrated in FIG. 5B) and serve as a terminal. In the embodiment shown in FIGs. 5A and 5B, the upper side of each battery cell 11 (the side described as "+" in FIG. 5A) is a positive electrode, the lower side (the side described as "-" in FIG. 5A) is a negative electrode, and each of the battery cells is connected in parallel to one another.

### (Second connection embodiment (parallel connection))

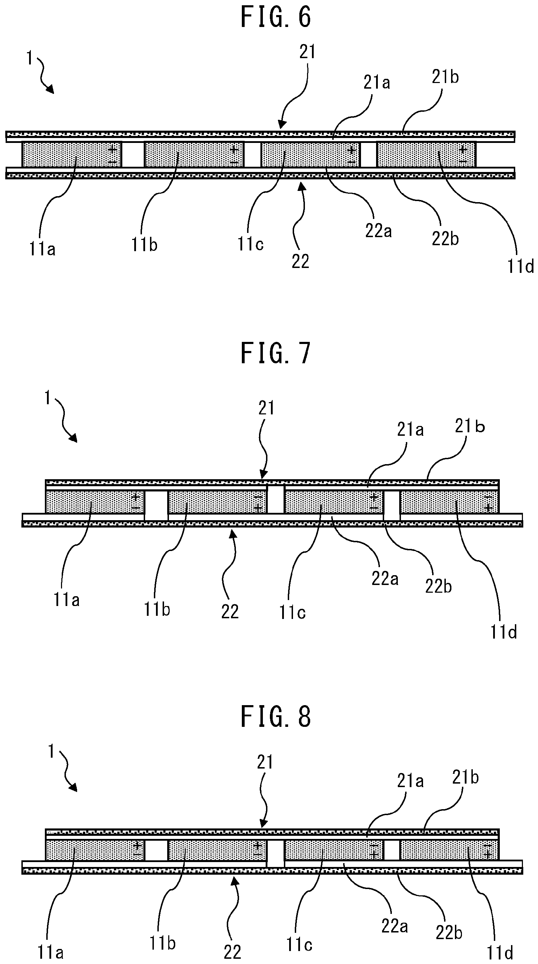

FIG. 6 shows a second connection embodiment of the present disclosure in which each of a plurality of battery cells are electrically connected in parallel to one another. In the embodiment shown in FIG. 6, the first inter-cell connecting film 21 is composed of the first conductive pattern 21a and the first insulating substrate 21b, and the second inter-cell connecting film 22 is composed of the second conductive pattern 22a and the first insulating substrate 22b. The four cells 11a, 11b, 11c, 11d are connected in parallel to each other as in the first embodiment.

### <Series Connection, or Series and Parallel Connections>

Next, an example in which each of the plurality of battery cells is electrically connected in series and an example in which a series connection and a parallel connection are mixed will be described.

In the assembled battery of the present disclosure, the positive electrode terminal portion of the exterior body of the first group of the plurality of battery cells and the negative electrode terminal portion of the exterior body of the second group of the plurality of battery cells may be in contact with the first conductive pattern, and the positive electrode terminal portion of the exterior body of the second group of the plurality of battery cells and the negative electrode terminal portion of the exterior body of the first group of the plurality of battery cells may be in contact with the second conductive pattern, whereby each of the plurality of battery cells may be electrically connected in series or connected in series and connected in parallel with one another.

### (Third connection embodiment (series connection))

FIG. 7 shows a third connection embodiment of the present disclosure in which each of a plurality of battery cells are electrically connected in series with one another.

In the embodiment schematically shown in FIG. 7, the first conductive patterned 21a is contacted with a positive electrode terminal portion of the exterior body of the battery cells 11a, 11c in the first group and a negative electrode terminal portion of the exterior body of the battery cells 11b, 11d in the second group. The second conductive patterned 22b contacts the positive electrode terminal portion of the exterior body of the battery cells 11b, 11d in the second group and the negative electrode terminal portion of the exterior body of the battery cells 11a, 11c in the first group. As shown in FIG. 7, in the assembled battery of the present disclosure, the first conductive pattern and the second conductive pattern may not be continuous, respectively. In the embodiment shown in FIG. 7, the first conductive pattern 21a and the second conductive pattern 22a are not continuous. However, the battery cells 11a, 11b, 11c, 11d are electrically connected continuously by changing the orientation of the battery cells 11 and contacting the respective conductive patterns. In the assembled battery shown in FIG. 7, the battery cells are connected in series with each other.

### (Fourth connection embodiment (series connection and parallel connection))

FIG. 8 shows a fourth connection embodiment of the present disclosure in which each of a plurality of battery cells are electrically connected in series and in parallel with one another.

As in the embodiment schematically shown in FIG. 8, a series connection and a parallel connection may be mixed. In the embodiment shown in FIG. 8, the positive electrode terminal portions of the exterior bodies of the battery cells 11a, 11b in the first group and the negative electrode terminal portions of the exterior bodies of the battery cells 11c, 11d in the second group are contacted with the first conductive patterned 21a. The second conductive patterned 22b contacts the positive electrode terminal portions of the exterior bodies of the battery cells 11c, 11d in the second group and the negative electrode terminal portions of the exterior bodies of the battery cells 11a, 11b in the first group. In the embodiment shown in FIG. 8, battery cells 11a, 11b of the first group are connected in parallel and battery cells 11c, 11d of the second group of are connected in parallel. Each group in which the battery cells are connected in parallel is connected in series.

### <<Arrangement of Battery Cells in Plane Direction>>

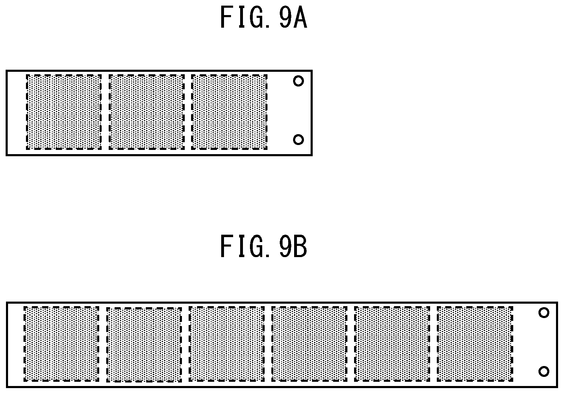

The assembled battery of the present disclosure is configured by sandwiching a plurality of battery cells by inter-cell connecting films. Therefore, the number of battery cells to be connected is not limited, and any number of battery cells can be connected. FIG. 9A is a schematic diagram of an example in which three battery cells are connected, and FIG. 9B is a schematic diagram of an embodiment in which six battery cells are connected.

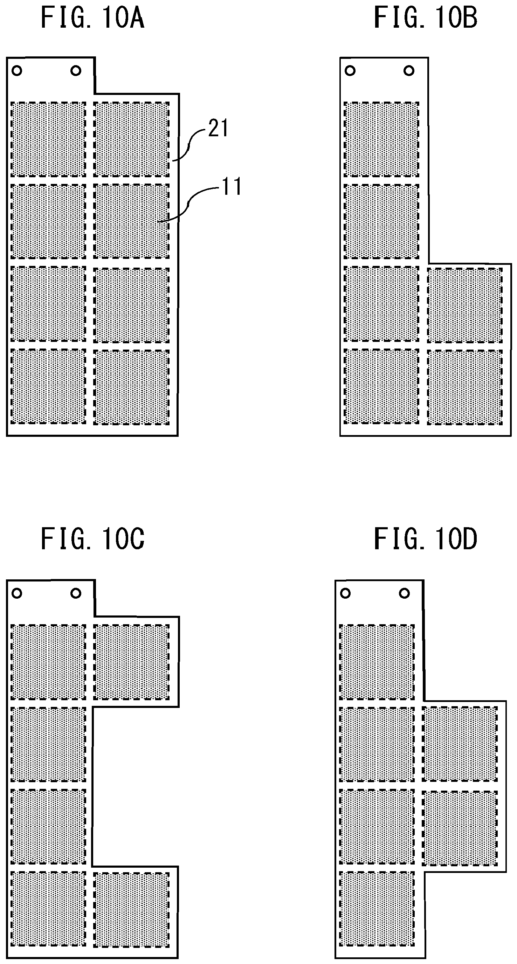

The arrangement of the battery cells is not limited to a linear shape, and can be freely arranged such as a rectangular shape, an L-shape, a U-shape, a T-shape, or the like. Also in this respect, the restriction on the place where the assembled battery is arranged is reduced. FIG. 10A shows a rectangular arrangement, FIG. 10B shows an L-shaped arrangement, FIG. 10C shows a U-shaped arrangement, and FIG. 10D shows a T-shaped arrangement.

### [Reference Sings List]

1 Battery pack
11, 11a, 11b, 11c, 11d Cell
111a, 111b Exterior body
113a, 113b Insulating part
21 First inter-cell connecting film
21a First conductive pattern
21b First insulating substrate
21c Hole
22 Second inter-cell connecting film
22a Second conductive pattern
22b Second insulating substrate
31 Positioning part

## Claims

1. An assembled battery, wherein
the assembled battery comprises a plurality of battery cells, a first inter-cell connecting film, and a second inter-cell connecting film;
each of the plurality of battery cells includes a conductive exterior body and an electrode body housed in the interior of the exterior body;
the exterior body has a positive electrode terminal portion electrically connected to the positive electrode of the electrode body, and a negative electrode terminal portion electrically connected to the negative electrode of the electrode body;
the first inter-cell connecting film has a first conductive pattern;
the second inter-cell connecting film has a second conductive pattern; and
one of the positive electrode terminal portion and the negative electrode terminal portion of the exterior body of each of the plurality of battery cells is in contact with the first conductive pattern, so that the other is in contact with the second conductive pattern, each of the plurality of battery cells is sandwiched by the first inter-cell connecting film and the second inter-cell connecting film, whereby via the first conductive pattern and the second conductive pattern, each of the plurality of battery cells is electrically connected in parallel and/or in series with one another.

2. The assembled battery according to claim 1, wherein
the positive electrode terminal portion of the exterior body of the plurality of battery cells contacts the first conductive pattern, and
the negative electrode terminal portion of the exterior body of the plurality of battery cells is in contact with the second conductive pattern,
whereby each of the plurality of battery cells is electrically connected in parallel to one another.

3. The assembled battery according to claim 1, wherein
in the first conductive pattern, the positive electrode terminal portion of the exterior body of the battery cell of the first group of the plurality of battery cells and the negative electrode terminal portion of the exterior body of the battery cell of the second group of the plurality of battery cells are in contact with each other,
the positive electrode terminal portion of the exterior body of the battery cell of the second group of the plurality of battery cells and the negative electrode terminal portion of the exterior body of the battery cell of the first group of the plurality of battery cells in contact with the second conductive pattern,
whereby, at least a portion of the plurality of battery cells is electrically connected in series with one another.

4. The assembled battery according to any one of claims 1 to 3, wherein a cross-sectional shape of the exterior body on the positive electrode side and/or the exterior body on the negative electrode side of the battery cell is U-shaped.

5. The assembled battery according to any one of claims 1 to 4, wherein the first inter-cell connecting film has a first conductive pattern, and a first insulating substrate supporting the first conductive pattern; and the second inter-cell connecting film has a second conductive pattern,
and a second insulating substrate supporting the second conductive pattern.

6. The assembled battery according to claim 5, wherein the first conductive pattern and the second conductive pattern are metal, and the first insulating substrate and the second insulating substrate are resin.

7. The assembled battery according to any one of claims 1 to 4, wherein a cooling layer is laminated on one or both of a surface opposite to a surface in contact with the positive electrode terminal portion or the negative electrode terminal portion of the first inter-cell connecting film and a surface opposite to a surface in contact with the positive electrode terminal portion or the negative electrode terminal portion of the second inter-cell connecting film.

8. The assembled battery according to any one of claims 1 to 4, wherein one or both of the first inter-cell connecting film and the second inter-cell connecting film has a positioning portion, and each of the plurality of battery cells is positioned by the positioning portion.
